# EUROPÄISCHE PATENTANMELDUNG

(11) **EP 1 245 541 A2**
(43) Veröffentlichungstag der Anmeldung: **02.10.2002**
(21) Anmeldenummer: 02006331.9
(22) Anmeldetag: 21.03.2002
(51) Int. Cl.: C03B 7/22, C03B 5/24, C03B 7/00, C03B 9/41

(54) **Automatisiertes Verfahren und Vorrichtung zum Herstellen eines geblasenen Glaskörpers**

(30) Priorität: 30.03.2001 DE 10116075
(71) Anmelder: ENDRESS + HAUSER CONDUCTA GESELLSCHAFT FÜR MESS UND REGELTECHNIK mbH & Co., 70839 Gerlingen (DE)
(72) Erfinder: Auras,Stefan, 09648 Mittweida (DE); Scholz, Katrin, Dr., 09627 Bobritzsch (DE); Babel, Wolfgang, Dr., 71263 Weil der Stadt (DE)
(74) Vertreter: Friz, Oliver

(57) **Zusammenfassung**

Gegenstand der Erfindung ist ein automatisiertes Verfahren zum Herstellen eines geblasenen Glaskörpers, insbesondere einer Glaswandung eines elektrochemischen Sensors, wobei ein luft- oder gasdurchströmbares Tauchrohr (10) in eine Glasschmelze (8) eingetaucht und anschließend wieder herausgezogen wird, um eine Menge geschmolzenen Glases aus der Glasschmelze zu entnehmen, und wobei das entnommene Glas mittels durch das Tauchrohr (10) strömender Luft oder Gas in die Form des herzustellenden Glaskörpers geblasen wird, mit folgenden Merkmalen:
- Es wird die Position der Oberfläche (42) der Glasschmelze (8) in Stellrichtung des Tauchrohrs (10) ermittelt,
- es wird entsprechend der ermittelten Position der Oberfläche (42) eine Stelleinrichtung (18) für das Tauchrohr (10) so angesteuert, dass das Tauchrohr mit seinem freien Ende über eine bestimmte vorgebbare Eintauchtiefe (h) in die Glasschmelze (8) eingetaucht und wieder herausgezogen und dabei eine vorbestimmmte Menge geschmolzenen Glases aufgenommen wird,
- das Tauchrohr (10) wird einer in einem Rechner (24) abgelegten Blasdruckkurve (p(t)) folgend mit Blasdruck beaufschlagt und dadurch die Form des herzustellenden Glaskörpers geblasen.
Hierdurch kann der Glaskörper reproduzierbar und automatisiert hergestellt werden.

## Beschreibung

Baugruppe eines elektrochemischen Sensors, beispielsweise eines pH-Sensors oder eines anderen ionensensitiven Sensors, wobei ein luft- oder gasdurchströmbares Tauchrohr in eine Glasschmelze eingetaucht und anschließend wieder herausgezogen wird, um eine. Menge geschmolzenen Glases aus der Glasschmelze zu entnehmen und wobei das entnommene Glas mittels durch das Tauchrohr strömender Luft oder Gas in die Form des herzustellenden Glaskörpers geblasen wird (man spricht hier vom "Anblasen" eines Glaskörpers). Desweiteren betrifft die Erfindung eine Vorrichtung zur Ausführung eines solchen Verfahrens.

Glaskörper, inbesondere in Kugel-, Kalotten- oder Zylinderform, werden seither in manueller Weise unter Anwendung handwerklicher Techniken in Glasbläserwerkstätten hergestellt, indem ein rohrförmiger, nicht notwendigerweise aber zumeist zylindrischer Körper, welcher das vorerwähnte Tauchrohr bildet, in eine Glasschmelze eingetaucht wird, um beim anschließenden Herausziehen des Tauchrohrs eine in etwa bestimmte Menge flüssigen Glases aufzunehmen. Der Glasbläser leitet dann durch Blasen mit dem Mund Luft durch das Tauchrohr, wodurch aus der aufgenommenen Menge geschmolzenen zähflüssigen Glases der herzustellende Glaskörper geblasen werden kann. Dieser Vorgang setzt glasbläserisches Können und Erfahrung voraus. Schließlich sind auch noch andere aber ähnliche manuelle Verfahren bekannt.

Es ist eine Aufgabe der vorliegenden Erfindung, dieses Verfahren zu automatisieren.

Diese Aufgabe wird gelöst durch ein automatisiertes Verfahren mit den folgenden Merkmalen des Anspruchs 1:
- Es wird die Position der Oberfläche der Glasschmelze in Stellrichtung des Tauchrohrs ermittelt;
- es wird entsprechend der ermittelten Position der Oberfläche eine Stelleinrichtung für das Tauchrohr so angesteuert, dass das Tauchrohr mit seinem freien Ende über eine bestimmte vorgebbare Eintauchtiefe in die Glasschmelze eintaucht und wieder herausgezogen und dabei eine vorbestimmte Menge geschmolzenen Glases aufgenommen wird;
- das Tauchrohr wird dann außerhalb der Glasschmelze einer in einem Rechner abgelegten Blasdruckkurve p(t) folgend mit Blasdruck beaufschlagt und dadurch die Form des herzustellenden Glaskörpers geblasen.

Da bei wiederholtem Eintauchen und Herausziehen des Tauchrohrs die Menge der verfügbaren Glasschmelze in dem Schmelztiegel abnimmt und das Flüssigkeitsniveau, also die Position der Oberfläche der Glasschmelze in dem Tiegel absinkt, ist es schwierig, in einem automatisierten Verfahren eine vorbestimmte Menge von Glasschmelze zu entnehmen. Die Erfindung schlägt daher vor, unter Anwendung ansich bekannter Techniken, die Position der Oberfläche der Glasschmelze in Stellrichtung des Tauchrohrs zu ermitteln. Entsprechend der ermittelten Position der Schmelzenoberfläche kann dann die Bewegung des Tauchrohrs gezielt ausgeführt werden, so dass das freie Ende des Tauchrohrs über eine bestimmte vorgebbare Eintauchtiefe in die Glasschmelze eintaucht, damit vorzugsweise nach einer vorbestimmten Verweildauer durch Herausziehen des Tauchrohrs mit einer vorzugsweise vorbestimmten Geschwindigkeit bei konstant gehaltener Glasschmelztemperatur eine vorbestimmte Menge an Glasschmelze mittels des Tauchrohrs entnommen werden kann.

Die Bestimmung der Position oder des Niveaus der Oberfläche der Glasschmelze in Stellrichtung des Tauchrohrs kann - wie vorstehend erwähnt - durch ansich bekannte Techniken ermittelt werden. Beispielsweise offenbart JP 7330342 die Bestimmung des Niveaus einer Glasschmelze über eine in die Glasschmelze eingetauchte Kontaktelektrode und eine weitere an die Oberfläche anzunähernde Kontaktelektrode. Nach JP 10281851 wird ein Thermoelement, welches in einem kühlmitteldurchflossenen Mantel vorgesehen ist, von außerhalb der Schmelzenoberfläche angenähert. Im Moment der Berührung kann ein Temperaturanstieg und daraus die Position der Glasschmelzenoberfläche ermittelt werden.

JP 56100316 arbeitet mit der Reflexion eines Lichtstrahls an der Oberfläche der Glasschmelze. JP 55087918 A2 wendet das Prinzip der kommunizierenden Röhren zur Niveaubestimmung an. Soweit ersichtlich wird mit JP 55032705 A2 das Prinzip der Lichtbrechung an einer Glasschmelzenoberfläche zur Niveauermittlung angewandt.

DE 40 27 679 A1 erreicht durch eine Gewichtsmessung des Schmelztiegels eine Konstanthaltung des Oberflächenniveaus. Nach WO 99/01741 wird die Viskosität und das Niveau der Flüssigkeitsoberfläche durch Torsionsschwingungen von eintauchenden Stäben bestimmt. EP 0 470 269 A wendet das archimedische Prinzip zur Niveaubestimmung an.

Wenn dann der Schmelzentropfen, der am freien Ende des Tauchrohrs haftet, entsprechend einer optimalen Blasdruckkurve p(t) beaufschlagt wird, so lässt sich hierdurch der herzustellende Glaskörper optimal anblasen. Es ist möglich, durch Ansteuerung einer Pumpvorrichtung den optimalen Druckverlauf entsprechend der Blasdruckkurve p(t) innerhalb des Tauchrohrs einzusteuern oder vorzugsweise einzuregeln.

Durch die Maßnahme der exakten Bestimmung der Position der Schmelzenoberfläche kann eine bestimmte vorgebbare Eintauchtiefe und damit eine bestimmte Schmelzenentnahme bei konstant gehaltener Glasschmelztemperatur automatisiert gewährleistet werden, und durch die weitere Maßnahme der gezielten optimalen Druckbeaufschlagung kann der herzustellende Glaskörper optimal automatisiert angeblasen werden.

Es erweist sich desweiteren als vorteilhaft, wenn die Parameter der Eintauchtiefe, der Verweilzeit und vorzugsweise auch der Geschwindigkeit des Herausziehens des Tauchrohrs, die alle insofern temperaturabhängig sind, als sie von der eingestellten Viskosität der Glasschmelze abhängen, in dem den Prozess steuernden Rechner vorgebbar gespeichert sind und die Stelleinrichtung für das Tauchrohr dementsprechend angesteuert wird. Die Einstellung der Viskosität der Glasschmelze wird durch Einstellung und Konstanthaltung der Schmelzentemperatur durch Temperaturregelung erreicht.

In weiterer Ausbildung des erfindungsgemäßen Verfahrens ist die herzustellende Körpergeometrie (Soll-Zustand) des Glaskörpers über vorgegebene Referenzpunkte in dem Rechner gespeichert und die tatsächliche Körpergeometrie (Ist-Zustand) wird über eine Kamera aufgenommen und mittels einer Bildverarbeitungseinrichtung und eines Rechenprogramms mit den gespeicherten Soll-Daten verglichen.

Unter Anwendung dieses weiteren Erfindungsgedankens ist es möglich, nach Durchlaufen der Blasdruckkurve den angeblasenen Körper zu erfassen (Ist-Zustand) und mit den hinterlegten Soll-Daten zu vergleichen. Es kann dann beispielsweise ein Klassifikationsvorgang durchgeführt werden, wonach der Glaskörper entweder als Ausschuss behandelt oder entsprechend seiner Annäherung an den Ist-Zustand in verschiedene Qualitätsklassen eingeordnet werden kann.

Es ist aber auch denkbar, dass die Erfassung der tatsächlichen Körpergeometrie (Ist-Zustand) während des Blasens des Glaskörpers intermittierend oder kontinuierlich durchgeführt wird. Auf diese Weise kann bei Erreichen eines vorbestimmmten Zustandes der Blasvorgang abgebrochen werden, der Druck p(t) wird dabei in vorbestimmter Weise weggenommen und der Glaskörper erstarrt. Es ist auch denkbar, dass entsprechend des Soll/Ist-Vergleichs Steuervorgänge vorgenommen werden, etwa dahingehend, dass bei Zurückbleiben, beispielsweise eines Durchmessers des Glaskörpers hinter den Soll-Werten bei einem gegebenen p(t) der Blasdruck erhöht wird.

Inbesondere bei der Herstellung von Glaskörpern, die als Baugruppe, insbesondere als Wandung oder gehäusebildende Komponente oder als Aufnahmeschacht bei einem insbesondere elektrochemischen Sensor verwendet werden sollen, erweist es sich als vorteilhaft, wenn als Tauchrohr ein im weitesten Sinne rohrförmiges, also kanalbildendes Glasrohr verwendet wird. Dies muss keinesfalls zylindrische Gestalt aufweisen. Das Tauchrohr kann dann zusammen mit dem angeblasenen Glaskörper direkt als Bauteil bei einem elektrochemischen Sensor verwendet werden.

Desweiteren ist Gegenstand der Erfindung eine automatisierte Vorrichtung zur Ausführung des vorstehend erläuterten Verfahrens mit den folgenden Merkmalen des Anspruchs 8:
- Eine Glasschmelzeinrichtung, insbesondere ein Tiegel, der beispielsweise induktionsbeheizt sein kann, mit einer Zugangsöffnung;
- ein luft- oder gasdurchströmbares Tauchrohr;
- eine Einrichtung zum Bestimmen der Position der Oberfläche der Glasschmelze,
- eine Stelleinrichtung zum Absenken, Eintauchen und Herausziehen des Tauchrohrs in bzw. aus der Glasschmelze,
- eine Pumpeinrichtung zum Anblasen des Glaskörpers,
- eine rechnerunterstützte Steuereinrichtung zur Steuerung der Stelleinrichtung für das Tauchrohr in Abhängigkeit von Ausgabewerten der Einrichtung zum Bestimmen der Position der Oberfläche der Glasschmelze und zur Steuerung der Pumpeinrichtung entsprechend der hinterlegten Blasdruckkurve.

Desweiteren erweist es sich als vorteilhaft, wenn die automatisierte Vorrichtung eine Bildaufnahmevorrichtung, beispielsweise in Form einer Digitalkamera, zum Aufnehmen der tatsächlichen Körpergeometrie des Glaskörpers, und zwar am Ende oder während des Blasvorgangs, und eine Bildverarbeitungsvorrichtung, die insbesondere aus einem Rechenprogramm gebildet sein kann, welches aus den Bilddaten für einen Soll/Ist-Vergleich geeignete verarbeitbare Daten macht bzw. diesen Vergleich ausführt. Zusätzlich erweist es sich als vorteilhaft, wenn die Bildverarbeitungsvorrichtung die genommenen Bilddaten über die tatsächliche Körpergeometrie auf einer Anzeigvorrichtung, insbesondere einem Monitor zur Anzeige bringt, vorzugsweise unterlegt durch die zu erzielenden Soll-Daten.

Weitere Merkmale, Einzelheiten und Vorteile der Erfindung, für die auch jeweils für sich genommen Schutz beansprucht wird, ergeben sich aus den beigefügten Patentansprüchen und aus der zeichnerischen Darstellung und nachfolgenden Beschreibung des erfindungsgemäßen Verfahrens bzw. der erfindungsgemäßen Vorrichtung. In der Zeichnung zeigt:
- Figur 1: eine schematische Darstellung der erfindungsgemäßen Vorrichtung zum Herstellen eines geblasenen Glaskörpers unter Andeutung der Verfahrensschritte;
- Figur 2: das untere Ende des Tauchrohr mit gerade angeblasenem Glaskörper; und
- Figur 3: eine Darstellung einer Blasdruckkurve p(t).

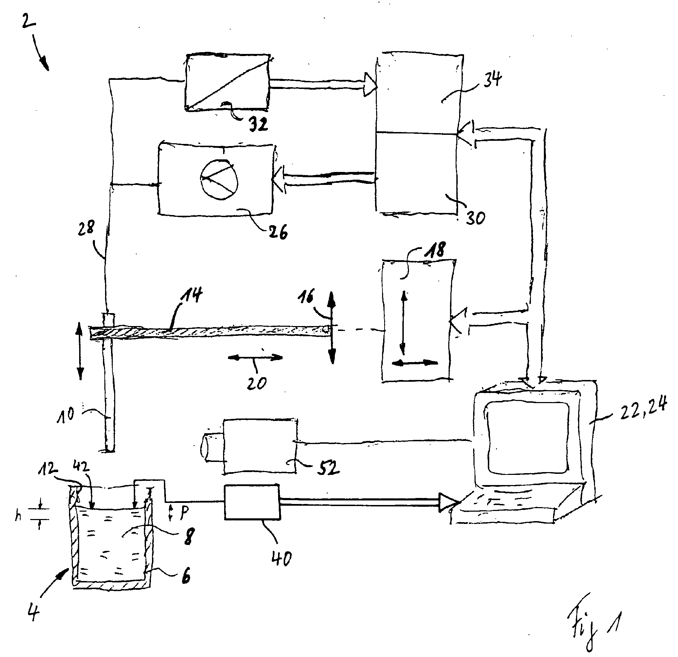

Figur 1 zeigt eine insgesamt mit dem Bezugszeichen 2 bezeichnete Vorrichtung zum Herstellen eines geblasenen Glaskörpers mit nachfolgend zu beschreibenden Vorrichtungskomponenten. Dargestellt ist eine Glasschmelzeinrichtung 4, die im einfachsten Fall von einem, insbesondere durch eine nicht dargestellte Induktionsspule beheizten Tiegel 6 gebildet ist, der eine Glasschmelze 8 aufnimmt. Desweiteren umfasst die Vorrichtung ein Tauchrohr 10, bei dem es sich um ein Glasrohr im weitesten Sinne handeln kann. Das Tauchrohr ist durch eine Öffnung 12 in den Schmelztiegel 6 einführbar und in die Glasschmelze 8 eintauchbar. Das Eintauchen des Tauchrohrs 10 in die Glasschmelze 8 wird durch Absenken einer Haltevorrichtung 14 für das Tauchrohr 10 entsprechend dem Doppelpfeil 16 erreicht. Hierfür ist eine Stelleinrichtung 18 vorgesehen, die erwünschtenfalls eine zusätzliche Bewegung in Richtung des Doppelpfeils 20 ausführen kann.

Die Stelleinrichtung 18 arbeitet rechnergesteuert und ist mit einer rechnerunterstützten Steuereinrichtung 22 eines Rechners 24 verbunden.

Mit dem Bezugszeichen 26 ist eine Pumpeinrichtung zum Anlegen eines Anblasdrucks an das Innere des Tauchrohrs 10 bezeichnet. Die Verbindung zwischen der Pumpvorrichtung 26 und dem einen Ende des Tauchrohrs 10 ist über einen flexiblen Schlauch 28 gegeben. Die Pumpeinrichtung 26 wird über eine Datenübertragungseinrichtung 30 von der rechnerunterstützten Steuereinrichtung 22 angesteuert. Desweiteren ist eine Druckmesseinrichtung 32 in Form eines Drucksensors vorgesehen, welcher den im Inneren des Tauchrohrs 10 anliegenden Anblasdruck erfasst und über eine Übertragungseinrichtung 34 an die Steuereinrichtung 22 leitet. Auf diese Weise wird ein Regelkreis gebildet, und eine in einer Speichereinrichtung des Rechners 24 hinterlegte Blasdruckkurve p(t) kann sehr exakt durchlaufen werden.

Schließlich ist eine schematisch angedeutete Einrichtung 40 zum Bestimmen der Position P bzw. des Niveaus der Oberfläche 42 der Glasschmelze 8, welche bzw. welches sich bei zunehmender Glasentnahme absenkt, vorgesehen. Die Einrichtung 40 kann in an sich beliebiger Weise ausgebildet sein und gibt verarbeitbare Daten über die Posion bzw. das Niveau der Glasschmelzenoberfläche an die Steuereinrichtung 22.

Da die Menge an Glasschmelze 8, welche beim Eintauchen und wieder Herausziehen des Tauchrohrs 10 aus dem Schmelztiegel 6 entnommen wird, von der Eintauchtiefe des Tauchrohrs 10 in die Schmelze 8 abhängt, ist es für die reproduzierbare Entnahme einer bestimmten Menge Glasschmelze erforderlich, dass stets diesselbe, vorzugsweise vorgebbare Eintauchtiefe erreicht wird. Die Position bzw. das Niveau der Oberfläche 42 der Glasschmelze sinkt aber bei fortlaufender Probennahme ab. Es ist deshalb wesentlich, dass mittels der Einrichtung 40 die genaue Position der Flüssigkeitsoberfläche 42 relativ zu einem Koordinatensystem der Haltevorrichtung 14 bzw. der Stelleinrichtung 18 ermittelt und an die Steuereinrichtung 22 des Rechners 24 gegeben wird, so dass in Abhängigkeit von dieser Position das Absenken des Tauchrohrs 10 derart vorgenommen werden kann, dass sich die bestimmte vorgebbare Eintauchtiefe stets gleich reproduzierbar erreichen lässt.

Die automatisierte Herstellung eines geblasenen Glaskörpers geschieht nach der Erfindung auf folgende Weise:

Zunächst wird über die schematisch dargestellte Einrichtung 40 das Niveau der Flüssigkeitsoberfläche 42 der Glasschmelze 8 ermittelt und an die Steuereinrichtung 22 gegeben. Ein Abgleich mit dem Koordinatensystem der Stelleinrichtung 18 kann über miteinander koppelbare Nullmarken oder Berührungssensoren auf einfache Weise hergestellt werden. Nach dem über die Einrichtung 40 die Position bzw. das Niveau der Flüssigkeitsoberfläche 42 in Stellrichtung des Tauchrohrs 10 ermittelt und an die Steuereinrichtung 22 gegeben worden ist, wird die Stelleinrichtung 18 derart angesteuert, dass das Tauchrohr 10 zunächst um eine solche Strecke abgesenkt wird, dass sich sein freies Ende auf dem Niveau der Flüssigkeitsoberfläche 42 befindet und dann darüber hinaus um eine vorbestimmte Eintauchtiefe h (gemessen vom Scheitelpunkt des Meniskus) in die Glasschmelze 8 eingetaucht wird. Nach einer im Speicher des Rechners hinterlegten Verweilzeit wird das Tauchrohr von der Stelleinrichtung 18 mit vorbestimmtem Bewegungs- bzw. Geschwindigkeitsprofil aus der Glasschmelze 8 herausgezogen. An dem freien Ende des Tauchrohrs 10 haftet jetzt eine vorbestimmte Menge zähflüssiger Glasschmelze. Es wird nun außerhalb der Schmelze rechnergesteuert und geregelt die im Rechner 24 hinterlegte Blasdruckkurve p(t) durch die Pumpeinrichtung 26 im Inneren des Tauchrohrs 10 angelegt, wodurch aus der entnommenen tropfenförmig am freien Ende des Tauchrohrs 10 haftenden Glasschmelze der herzustellende Glaskörper geblasen wird. Es kann auf diese Weise ein kugelförmiger Glaskörper mit beispielhaften Durchmessern zwischen 5 und 15 mm geblasen werden.

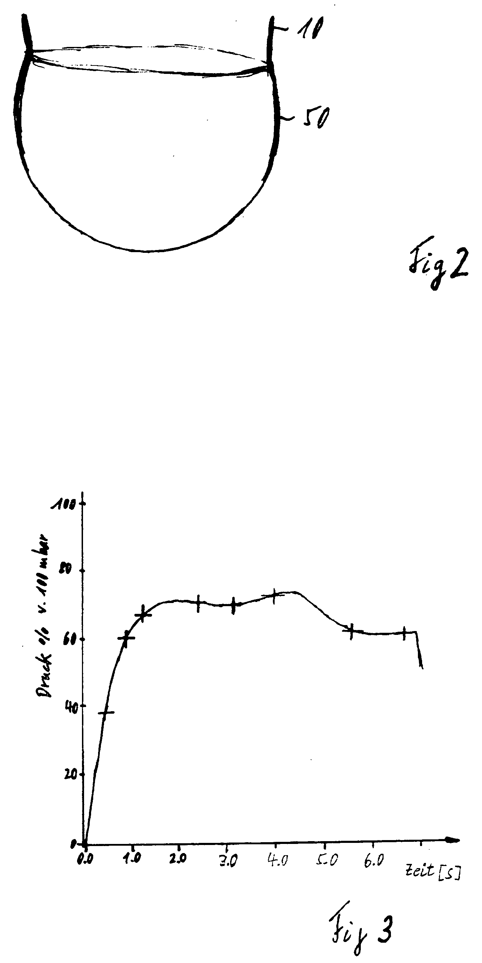

Während dieses Vorgangs kann die tatsächliche Geometrie des in Figur 2 am freien Ende des Tauchrohrs 10 angedeuteten Glaskörpers 50 über eine Bildaufnahmevorrichtung 52, beispielsweise eine Digitalkamera, aufgenommen werden. Über eine Bildverarbeitungseinrichtung, in Form eines Bildverarbeitungsprogramms, welches vorzugsweise im Rechner 24 läuft, kann die Gestalt des Glaskörpers 50 während des Anblasens auf einer Anzeigevorrichtung, beispielsweise dem Display des Rechners 24, angezeigt werden. Über die Bildverarbeitungseinrichtung kann auch die tatsächliche Körpergeometrie des Glaskörpers 50 rechnerisch ermittelt und erfasst werden, so dass ein Vergleich mit im Rechner 24 hinterlegten Soll-Daten möglich ist. Auf diese Weise kann entschieden werden, ob eine geforderte Durchmessergröße des Glaskörpers 50 erreicht ist und der weitere Anblasvorgang dann abgebrochen und der Glaskörper zur Erstarrung gebracht werden soll, oder ob der Blasvorgang fortgesetzt werden soll. Es ist aber auch möglich, jeweils nach der Ausführung des Anblasvorgangs, insbesondere nach der Erstarrung, die tatsächliche Körpergeometrie zu erfassen und für einen Klassifizierungsvorgang (Einteilung in Ausschuss oder verschiedene Qualitätsstufen) zu verwenden.

Figur 2 zeigt angedeutet das untere Ende des Tauchrohrs 10 mit gerade angeblasenem Glaskörper 50.

Desweiteren zeigt Figur 3 den beispielhaften Verlauf einer Blasdruckkurve p(t).

## Patentansprüche

1. Automatisiertes Verfahren zum Herstellen eines geblasenen Glaskörpers, insbesondere einer Glaswandung oder Baugruppe eines elektrochemischen Sensors, wobei ein luft- oder gasdurchströmbares Tauchrohr (10) in eine Glasschmelze (8) eingetaucht und anschließend wieder herausgezogen wird, um eine Menge geschmolzenen Glases aus der Glasschmelze zu entnehmen, und wobei das entnommene Glas mittels durch das Tauchrohr (10) strömender Luft oder Gas in die Form des herzustellenden Glaskörpers geblasen wird, mit folgenden Merkmalen:
- Es wird die Position der Oberfläche (42) der Glasschmelze (8) in Stellrichtung des Tauchrohrs (10) ermittelt,
- es wird entsprechend der ermittelten Position der Oberfläche (42) eine Stelleinrichtung (18) für das Tauchrohr (10) so angesteuert, dass das Tauchrohr mit seinem freien Ende über eine bestimmte vorgebbare Eintauchtiefe (h) in die Glasschmelze (8) eingetaucht und wieder herausgezogen und dabei eine vorbestimmmte Menge geschmolzenen Glases aufgenommen wird,
- das Tauchrohr (10) wird einer in einem Rechner (24) abgelegten Blasdruckkurve (p(t)) folgend mit Blasdruck beaufschlagt und dadurch die Form des herzustellenden Glaskörpers geblasen.

2. Verfahren nach Anspruch 1, **dadurch gekennzeichnet, dass** die Parameter der Eintauchtiefe, der Verweilzeit und/oder der Geschwindigkeit, mit der das Tauchrohr (10) wieder aus der Glasschmelze (8) herausgezogen wird, in einem den Prozeß steuernden Rechner (24) vorgebbar gespeichert sind und die Stelleinrichtung (18) dementsprechend angesteuert wird.

3. Verfahren nach Anspruch 1 oder 2, **dadurch gekennzeichnet, dass** die herzustellende Körpergeometrie (Soll-Zustand) des Glaskörpers über vorgegebene Referenzpunkte in dem Rechner gespeichert ist und dass die tatsächliche Körpergeometrie (Ist-Zustand) über eine Kamera aufgenommen und mittels einer Bildverarbeitungseinrichtung und eines Rechenprogramms mit den gespeicherten Soll-Daten verglichen wird.

4. Verfahren nach Anspruch 1, 2 oder 3, **dadurch gekennzeichnet, dass** während des Blasens des Glaskörpers die Entwicklung der tatsächlichen Körpergeometrie (Ist-Zustand) über eine Kamera (52) aufgenommen und mittels einer Bildverarbeitungseinrichtung und eines Rechenprogramms mit den gespeicherten Soll-Daten verglichen wird.

5. Verfahren nach Anspruch 4, **dadurch gekennzeichnet, dass** in Abhängigkeit des Soll/Ist-Vergleichs Steueroder Klassifikationsvorgänge vorgenommen werden.

6. Verfahren nach einem oder mehreren der vorstehenden Ansprüche, **dadurch gekennzeichnet, dass** als Tauchrohr (10) ein Glasrohr verwendet wird.

7. Verfahren nach einem oder mehreren der vorstehenden Ansprüche, **dadurch gekennzeichnet, dass** das Tauchrohr (10) zusammen mit dem angeblasenen Glaskörper als Wandung, Gehäusekomponente oder Baugruppe eines elektrochemischen Sensors hergestellt wird.

8. Automatisierte Vorrichtung zur Ausführung des Verfahrens nach einem oder mehreren der vorstehenden Ansprüche, mit folgenden Merkmalen:
- eine Glasschmelzeinrichtung (4) mit einer Zugangsöffnung (12),
- ein luft- oder gasdurchströmbares Tauchrohr (10),
- eine Einrichtung (40) zum Bestimmen der Position der Oberfläche der Glasschmelze,
- eine Stelleinrichtung (18) zum Absenken, Eintauchen und Herausziehen des Tauchrohrs (10) in bzw. aus der Glasschmelze (8),
- eine Pumpeinrichtung (26) zum Anblasen des Glaskörpers,
- eine rechnerunterstützte Steuereinrichtung (22) zur Steuerung der Stelleinrichtung (18) für das Tauchrohr (10) in Abhängigkeit von Ausgabewerten der Einrichtung (40) zum Bestimmen der Position der Oberfläche (42) der Glasschmelze (8) und zur Steuerung der Pumpeinrichtung (26) entsprechend der hinterlegten Blasdruckkurve.

9. Vorrichtung nach Anspruch 8, **dadurch gekennzeichnet, dass** die rechnerunterstützte Steuereinrichtung (22) vorgebbare Steuerparameter zu Eintauchtiefe, Eintauchzeit und Stellgeschwindigkeit berücksichtigt und die Stelleinrichtung (18) entsprechend ansteuert.

10. Vorrichtung nach Anspruch 8 oder 9, **gekennzeichnet durch** eine Bildaufnahmevorrichtung (52) zum Aufnehmen der tatsächlichen Körpergeometrie und eine Bildverarbeitungseinrichtung.
